**Europäisches Patentamt**

**European Patent Office**

**Office européen des brevets**

(19)

(11) Veröffentlichungsnummer: **0 367 959**

**A1**

(12) # EUROPÄISCHE PATENTANMELDUNG

(21) Anmeldenummer: **89117545.7**

(22) Anmeldetag: **22.09.89**

(51) Int. Cl.5: **G01B 21/00**

(30) Priorität: **23.09.88 DE 3832331**

(43) Veröffentlichungstag der Anmeldung:
**16.05.90 Patentblatt 90/20**

(84) Benannte Vertragsstaaten:
**AT CH DE FR GB IT LI NL SE**

(71) Anmelder: **Mauser-Werke Oberndorf GmbH**
**Teckstrasse 11**
**D-7238 Oberndorf(DE)**

(72) Erfinder: **Gruhler, Siegfried, Dipl.-Ing.**
**Zollerstrasse 10**
**D-7243 Vöhringen 2(DE)**
Erfinder: **Hug, Thomas**
**Holderstaudenstrasse 31**
**D-7230 Schramberg-Waldmössingen(DE)**
Erfinder: **Schwarz, Volker**
**Schubertstrasse 10**
**D-7214 Zimmern(DE)**

(74) Vertreter: **Hofmann, Gerhard, Dipl.-Ing.**
**Patentassessor et al**
**Stephanstrasse 49**
**D-8500 Nürnberg(DE)**

(54) **Messmaschine.**

(57) Bei einer Meßmaschine ist ein Meßobjekt in eine
Meßzone(6) einsetzbar. In der Meßzone(6) ist ein
Meßtaster(5) verfahrbar, der an einem an einer
Antriebseinrichtung(4) gelagerten, vertikalen
Meßarm(3) angeordnet ist. Um die Beschickung der
Meßzone(6) mit einem Meßobjekt zu erleichtern, ist
der Meßarm(3) unterhalb der Meßzone(6) mit der
Antriebseinrichtung(4) verbunden. Die Umgebung
der Meßzone(6) ist wenigstens oben und an drei
Seiten von der Antriebseinrichtung(4) frei.

**Fig. 1**

## Meßmaschine

Die Erfindung betrifft eine Meßmaschine mit einer Meßzone, in die ein Meßobjekt einsetzbar ist und mit einem an einer Antriebseinrichtung gelagerten, vertikalen Meßarm, der einen in der Meßzone verfahrbaren Meßtaster trägt.

Eine derartige Meßmaschine ist beispielsweise in der DE-OS 36 20 118 beschrieben. Bei bekannten 3D-Meßmaschinen ist der Meßarm vertikal verschieblich oben an einem horizontal verschieblichen Portal angeordnet. Das Portal begrenzt den für das Meßobjekt zur Verfügung stehenden Beladeraum in der Umgebung der Meßzone. Ungünstig dabei ist vor allem auch, daß Handhabungseinrichtung, die das Meßobjekt der Meßmaschine maschinell zuführen, genau auf die Meßmaschine abgestimmt werden müssen, damit Kollisionen zwischen dem Meßobjekt bzw. der Handhabungseinrichtung und der Meßmaschine vermieden werden.

In der DE-PS 26 47 147 ist eine Meßmaschine mit einer über einem Meßtisch angeordneten Konsole beschrieben, an der oberhalb der Meßzone der Meßarm angeordnet ist. Auch hier ist durch die Anordnung des Meßarms die Beschickungsmöglichkeit der Meßzone beschränkt.

Aufgabe der Erfindung ist es, eine Meßmaschine der eingangs genannten Art vorzuschlagen, bei der die Beschickung, insbesondere mittels einer maschinellen Handhabungseinrichtung, mit dem Meßobjekt erleichtert ist.

Erfindungsgemäß ist obige Aufgabe bei einer Meßmaschine der eingangs genannten Art dadurch gelöst, daß der Meßarm nur unterhalb der Meßzone an der Antriebseinrichtung angeordnet ist und die Umgebung der Meßzone wenigstens oben und an drei Seiten von der Antriebseinrichtung frei ist.

Dadurch ist erreicht, daß das Meßobjekt ohne Kollisionsgefahr in die Meßzone gefahren werden kann. Wegen der Freiheit der Umgebung der Meßzone lassen sich hierfür die verschiedensten Handhabungseinrichtungen verwenden. Die Umgebung der Meßzone ist nicht durch ein Portal, Ständer oder Konsolen für den Meßarm begrenzt.

Ein weiterer Vorteil der Erfindung besteht darin, daß bei Portalen, Ständern oder Konsolen nötige Abdeckungen nicht erforderlich sind.

Weitere vorteilhafte Ausgestaltung der Erfindung ergeben sich aus der folgenden Beschreibung eines Ausführungsbeispiels. In der Zeichnung zeigen:

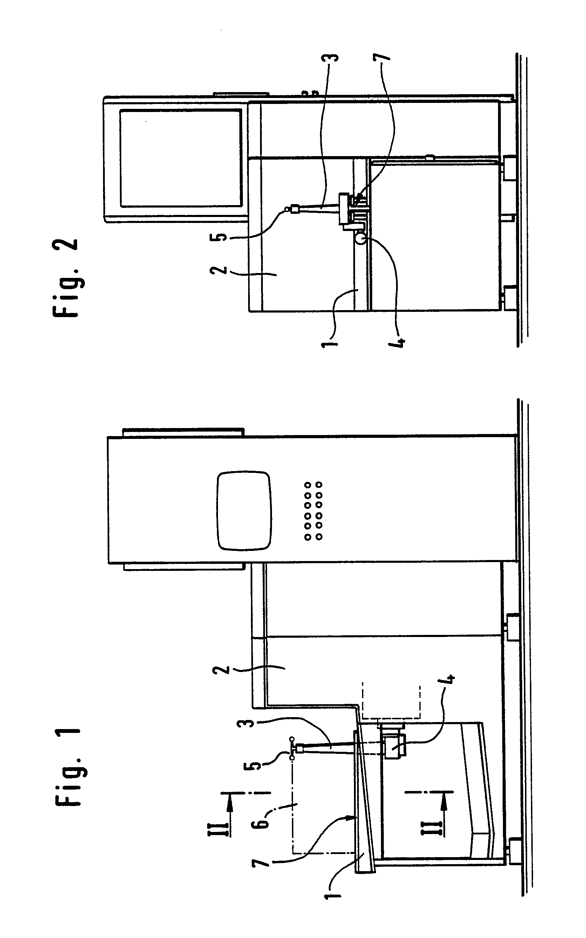

Figur 1 eine 2D-Meßmaschine schematisch in Seitenansicht und

Figur 2 eine Ansicht der Maschine in Richtung der Linie II-II nach Figur 1.

Eine 2D-Meßmaschine zur Messung von Durchmessern von Drehteilen weist einen Meßtisch(1) auf. Neben dem Meßtisch(1) ist ein Gehäuse(2) angeordnet, in dem die Steuerung der Meßmaschine untergebracht ist.

Unterhalb des Meßtischs(1) ist ein vertikaler Meßarm(3) mit einer Antriebseinrichtung(4) verbunden. Der Meßarm(3) trägt an seinem der Antriebseinrichtung(4) abgewandten, oberen Ende einen Meßtaster(5). Dieser ist über den Meßarm(3) mittels der Antriebseinrichtung(4) in einer Meßzone(6) verfahrbar.

Der Meßarm(3) durchragt einen Schlitz(7) des Meßtisches(1). Oberhalb des Meßtasters(5) ist keine Traverse angeordnet. Der Meßtisch(1) ist an drei Seiten von keinen Ständern überragt. Der Meßtisch(1) ist also von oben und von drei Seiten frei zugänglich.

In die Meßzone(6) ist mittels einer nicht näher dargestellten Handhabungseinrichtung ein zu vermessendes Meßobjekt einbringbar. Da der Meßtisch(1) frei zugänglich ist, ist der Einsatz nicht auf spezielle, der Meßmaschine angepaßte Handhabungseinrichtungen beschränkt. Das Meßobjekt läßt sich mit verschiedensten Handhabungseinrichtungen auf den Meßtisch(1) bringen. Eine Kollisionsgefahr besteht dabei nicht. Auf dem Meßtisch(1) läßt sich das Meßobjekt durch nicht dargestellte, neben dem Schlitz(7) angeordnete Spannvorrichtungen festlegen und dann mittels des Meßtasters(5) vermessen. Durch die Antriebseinrichtung(4) kann der Meßarm(3) in vertikaler Richtung und in einer horizontalen Richtung verfahren werden.

Durch die freie Zugänglichkeit des Meßtisches(1) ist es auch möglich, das vermessene Meßobjekt in einer von mehreren verschiedenen Richtungen vom Meßtisch(1) zu entfernen.

Bei dem Beschicken des Meßtisches(1) und beim Entfernen des Meßobjekts ist der Meßarm(3) bis nahe an das Gehäuse(2) oder in das Gehäuse(2) hinein verfahren. Eine Kollisionsgefahr ist damit weiter vermindert.

Die Meßmaschine kann auch an der dem Meßtisch(1) gegenüberliegenden Seite des Gehäuses(2) mit einem weiteren, gleichen Meßtisch versehen sein. Es lassen sich die Meßtische dann wechselweise mit einem Meßobjekt beschicken. Die Meßobjekte werden dann wechselweise vermessen. Eine solche Meßmaschine läßt sich zwei Drehmaschinen zuordnen.

## Ansprüche

1. Meßmaschine mit einer Meßzone, in die ein Meßobjekt einsetzbar ist, und mit einem an einer Antriebseinrichtung gelagerten, vertikalen Meßarm, der einen in der Meßzone verfahrbaren Meßtaster trägt,

dadurch gekennzeichnet,

daß der Meßarm(3) nur unterhalb der Meßzone(6) an der Antriebseinrichtung(4) angeordnet ist und die Umgebung der Meßzone(6) wenigstens oben und an drei Seiten von der Antriebseinrichtung(4) frei ist.

2. Meßmaschine nach Anspruch 1, dadurch gekennzeichnet, daß der Meßarm(3) einen Meßtisch(1) durchragt.

3. Meßmaschine als 2-Koordinatenmeßmaschine nach Anspruch 2, dadurch gekennzeichnet, daß der Meßarm(3) einen Schlitz(7) des Meßtisches(1) durchragt und mittels der Antriebseinrichtung(4) in Längsrichtung des Schlitzes(7) verschieblich und im Schlitz(7) heb- und senkbar ist.

4. Meßmaschine nach einem der vorhergehenden Ansprüche, dadurch gekennzeichnet, daß neben der Meßzone(6) ein Gehäuse(2) der Meßmaschine vorgesehen ist und der Meßarm(3) in seiner Ruhestellung dicht vor oder im Gehäuse(2) steht.

Fig. 1

Fig. 2

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁴) |
|---|---|---|---|

**EINSCHLÄGIGE DOKUMENTE** — EP 89117545.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl⁴) |
|---|---|---|---|
| X | DE - A1 - 2 857 492 (FORSMAN) * Gesamt * | 1,2 | G 01 B 21/00 |
| A | | 3 | |
| X | US - A - 3 197 873 (ALLER) * Gesamt * | 1,2 | |
| A, | | 3 | |
| A | DE - A1 - 3 123 489 (HEIDENHAIN) * Fig. 1 * | 1 | |
| A | DE - A1 - 2 537 328 (RANK) * Fig. 1,2,5 * | 1 | |

RECHERCHIERTE SACHGEBIETE (Int. Cl⁴)

G 01 B 5/00
G 01 B 7/00
G 01 B 21/00

Der vorliegende Recherchenbericht wurde für alle Patentansprüche erstellt.

| Recherchenort | Abschlußdatum der Recherche | Prüfer |
|---|---|---|
| WIEN | 22-02-1990 | TOMASELLI |